# EUROPÄISCHE PATENTSCHRIFT

(11) **EP 1 308 632 B1**
(45) Veröffentlichungstag und Bekanntmachung des Hinweises auf die Patenterteilung: **20.10.2004**
(21) Anmeldenummer: 02024422.4
(22) Anmeldetag: 28.10.2002
(51) Int. Cl.: F04D 29/66, H02K 5/24

(54) **Vorrichtung zur elastischen Anordnung eines Elektromotors**
Device for elastic arrangement of an electric motor
Dispositif pour arrangement élastique d'un moteur electrique

(30) Priorität: 02.11.2001 DE 10153908
(43) Veröffentlichungstag der Anmeldung: 07.05.2003
(73) Patentinhaber: Behr GmbH & Co., 70469 Stuttgart (DE)
(72) Erfinder: Bitzer, Markus, Dipl. Ing., 71691 Freiberg a. N. (DE); Grömme, Christian, Dipl. Ing., 88719 Stetten (DE)
(74) Vertreter: Grauel, Andreas, Dr.

(56) Entgegenhaltungen:
- EP-A- 0 848 477
- DE-A- 19 730 810
- FR-A- 1 521 494
- US-A- 4 161 667
- US-A- 5 533 704

## Beschreibung

Die Erfindung betrifft eine Vorrichtung zur elastischen Anordnung eines Elektromotors in einer Aufnahme, wobei zwischen einem Elektromotor und einer Aufnahme zumindest ein elastisches Isolationselement angeordnet ist.

Solche Vorrichtungen sind beispielsweise durch die DE 4329804 bekannt geworden.

Solche Elektromotoren können beispielsweise in einem Gebläse in einem Fahrzeug eingesetzt werden, wobei dabei das Problem auftritt, daß die Positionierung des Gebläses, wie insbesondere des Lüfterrades des Gebläses relativ zu seinem Gehäuse langzeitstabil sein muß, damit das Lüfterrad nicht an seinem Gehäuse streift. Dadurch könnten Beschädigungen und/oder störende Geräusche hervorgerufen werden.

Dennoch muß der das Lüfterrad tragende Elektromotor möglichst im gesamten Operationsbereich des Fahrzeuges so weich aufgehängt sein, daß Vibrationen im Bereich des Elektromotors beispielsweise nicht durch Körperschall auf andere Bauteile des Fahrzeuges übertragen werden und für die Insassen des Fahrzeuges als störend empfunden werden könnten.

Aufgabe der Erfindung ist es, eine Anordnung der oben genannten Art zu schaffen, die gegenüber dem Stand der Technik verbessert ist. Weiterhin ist es eine Aufgabe der Erfindung, bei einer solchen Vorrichtung eine Schwingungsisolation des Motors bei gleichzeitig verbesserter Positionierung zu schaffen.

Dies wird erfindungsgemäß bei einer obigen Vorrichtung dadurch erreicht, daß zumindest ein Isolationselement insbesondere zur Schwingungsisolation aus einem ersten schalenförmigen Element, einem zweiten schalenförmigen Element und einem elastischen Element besteht. Das elastische Element wird vorteilhaft im wesentlichen von den schalenförmigen Elementen umgeben. Besonders vorteilhaft ist es dabei, wenn das erste schalenförmige Element und/oder das zweite schalenförmige Element zumindest einen Vorsprung aufweist, der in zumindest eine Ausnehmung des zweiten schalenförmigen Elements bzw. des ersten Elements eingreift. Dadurch kann eine Relativbewegung des einen schalenförmigen Teiles relativ zu dem anderen schalenförmigen Teil geführt werden und/oder in einem anderen Ausführungsbeispiel in ihrer Amplitude begrenzt werden. Erfindungsgemäß kann dies auch erreicht werden, wenn das erste und/oder zweite schalenförmige Element einen Kragen oder Finger aufweist, der das zweite bzw. erste schalenförmige Element zumindest teilweise umgreift.

Besonders zweckmäßig ist es, wenn das erste schalenförmige Element und/oder das zweite schalenförmige Element zumindest ein Anschlagmittel aufweist, das mit zumindest einem Gegenanschlagmittel des zweiten und/oder ersten schalenförmigen Elements zusammenwirkt, mittels welchem eine relative Bewegung des einen schalenförmigen Elements relativ zu dem anderen schalenförmigen Elementes begrenzt wird. Diese Begrenzung der Relativbewegung des einen schalenförmigen Elements relativ zu dem anderen schalenförmigen Elements ist zweckmäßig, weil dadurch die Verlagerbarkeit des Elektromotors und somit auch des Lüfterrades im Betrieb begrenzt wird. Durch die weiche Aufhängung des Motors durch das elastische Element erfolgt eine Schwingungsisolation und die Anschlagmittel bewirken eine Begrenzung der maximalen Auslenkung bzw. Relativbewegung. Insbesondere dadurch könnte beispielsweise ein Wuchtvorgang des Gebläses und/oder des Lüfters entfallen, da durch die vorteilhafte Entkopplung des Eleklromotors durch zumindest ein Isolationselement Vibrationen nicht auf andere Bauteile des Fahrzeuges übertragen werden würden, die bei einer gewissen vorliegenden Unwucht entstehen würden. Die Anschlagmittel sind weiterhin zweckmäßiger Weise vorgesehen, damit größere Relativverschiebungon im Betrieb auf ein erlaubtes Maß begrenzt werden.

Erfindungsgemäß ist es vorteilhaft, wenn das elastische Element eine quaderförmige Gestalt aufweist. Bei anderen Ausführungsbeispielen könnte die äußere Form jedoch auch in einer anderen Weise realisiert sein, wie beispielsweise in Form eines Zylinders, einer Tonne oder auch als mehreckiges Element. Dabei kann es zweckmäßig sein, wenn das elastische Element zumindest einen durchgängigen Kanal aufweist, der nicht mit dem elastischen Material ausgefüllt ist. Ebenfalls kann es zweckmäßig sein, wenn das elastische Element zumindest einzelne Aussparungen aufweist und/oder das elastische Element eine Mehrzahl von Aussparungen aufweist, die durch Trennwände aus dem elastischen Material gegeneinander abgegrenzt sind.

Besonders vorteilhaft ist es, wenn das elastische Element aus einem Material besteht und somit im wesentlichen sortenrein ausgebildet ist. Dies ist zum einen für die Beschaffung vorteilhaft, aber auch bei der späteren Entsorgung umweltverträglich. Besonders vorteilhaft ist es, wenn das elastische Element aus Silikon besteht. Dies weist den Vorteil auf, daß das Material im Temperaturbereich der Anwendung in einem Kraftfahrzeug keine starken Schwankungen hinsichtlich seiner elastischen Eigenschaften und/oder hinsichtlich der Formstabilität aufzeigt.

Bei einigen Ausführungsvarianten der Erfindung ist es jedoch auch zweckmäßig, daß das elastische Element aus zumindest zwei Materialien besteht, damit das Resonanzverhalten der Vorrichtung besser abgestimmt werden kann. Dabei ist es zweckmäßig, wenn eines der Materialien Silikon ist.

Im folgenden wird die Erfindung anhand von Ausführungsbeispielen unter Bezugnahme auf die Zeichnung näher erläutert. Dabei zeigt:
- Figur 1: eine Vorrichtung zur elastischen Anordnung eines Elektromotors,
- Figur 2: eine Anordnung von schalenförmigen Elementen,
- Figur 3: eine Darstellung schalenförmiger Elemente,
- Figur 4: eine Darstellung von schalenförmigen Elementen,
- Figur 5: eine Darstellung eines elastischen Elementes im Schnitt und
- Figur 6: eine Darstellung einer Anordnung eines elastischen Elements.

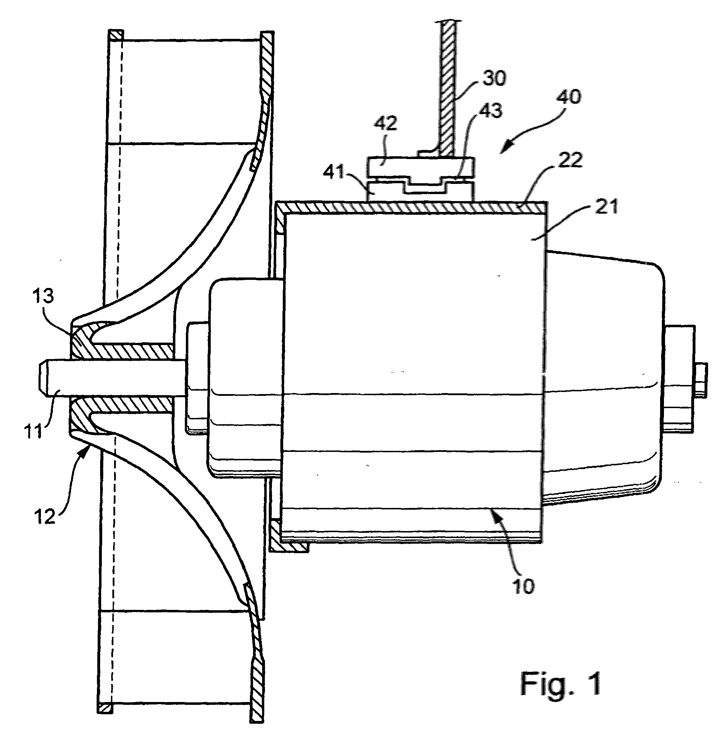

Die Figur 1 zeigt einen Elektromotor 10, der auf seiner Welle 11 beispielsweise ein Gebläserad 12 trägt, das mit seiner Nabe 13 mit der Welle 11 verbunden ist.

Um den Elektromotor 10 an einem Fahrzeugteil, wie insbesondere einem Gehäuse eines Gebläses oder einem anderen Teil eines Kraftfahrzeuges zu befestigen, ist zur Aufnahme des Elektromotors ein Motoradapter 22 vorgesehen. Der Motoradapter kann als ringförmiges oder topfförmiges Element ausgebildet sein, in das der Elektromotor 10 einschiebbar ist, wobei der Motoradapter das Gehäuse 21 des Elektromotors hält. Gemäß weiterer Ausführungsvarianten des Motoradapters kann dieser je nach Bauraumsituation auch anders ausgestaltet sein, wie beispielsweise mehrteilig, wobei die einzelnen Teile des Motoradapters dann mit dem Elektromotor, wie insbesondere mit dem Gehäuse 21 verbindbar sind. Auch kann es zweckmäßig sein, wenn der Motoradapter als ganzes oder in Teilen mit dem Gehäuse des Elektromotors einstückig ausgebildet ist und somit einen integralen Bestandteil des Gehäuses bildet. Mittels des Motoradapters kann der Elektromotor an einem Motorhalter 30 eines Gehäuses oder einem anderen Teil eines Kraftfahrzeuges befestigbar sein. Zwischen dem Motoradapter 22 und dem Motorhalter 30 ist zumindest ein Isolationselement 40 vorgesehen. Dieses Isolationselement 40 gewährleistet einen zumindest geringfügige Verlagerbarkeit des Elektromotors gegenüber dem Motorhalter 30 und erlaubt gleichzeitig eine Dämpfung und/oder Isolation von Schwingungen, die von dem Elektromotor ausgehen, damit diese weitestgehend isoliert, gedämpft oder unterdrückt werden und nicht oder nur geringfügig mittels Körperschall auf andere Bauteile des Fahrzeuges übertragen werden.

Das zumindest eine Isolationselement 40 besteht dabei vorteilhaft aus zwei schalenförmigen Elementen 41 und 42, zwischen welchen ein elastisches Element 43 angeordnet ist. Das erste schalenförmige Element 41 ist dabei mit dem Elektromotor bzw. mit dem Motoradapter 22 verbindbar oder einstückig mit diesem ausgebildet. Das zweite schalenförmige Element 42 ist mit dem Motorhalter 30 verbindbar oder mit diesem vorteilhaft einstückig ausgebildet.

Besonders zweckmäßig ist es, wenn über den Umfang des Elektromotorgehäuses eine Mehrzahl, wie insbesondere drei, von Isolationselementen verteilt angeordnet sind, die eine zumindest geringfügige Bewegung des Elektromotors relativ zu dem Motorhalter erlauben und eine Dämpfung und/oder Isolation von Schwingungen des Elektromotors gewährleisten.

Durch das zwischen den schalenförmigen Elementen angeordnete elastische Element kann der Elektromotor relativ zu der Motorhalterung geringfügig in radialer und/oder axialer Richtung und/oder in Umfangsrichtung bzw. auch in einer Richtung, die sich aus allen drei Koordinatenrichtungen zusammensetzt, wie bei einer Kippbewegung bewegbar sein. Das elastische Element weist dabei vorzugsweise eine Struktur auf, die eine entsprechende elastische Anbindung des Elektromotors in den jeweiligen Richtungen (radial bzw. axial bzw. in Umfangsrichtung) gewährleistet. So kann ein anisotropes elastisches Verhalten des elastischen Elementes gesteuert werden.

Weiterhin ist es bevorzugt, wenn das elastische Verhalten des elastischen Elementes im wesentlichen temperaturunabhängig ist bzw. nur einen sehr geringe Temperaturabhängigkeit im üblichen Temperaturbereich eines Fahrzeuges besitzt. Dabei ist es zweckmäßig, wenn das Element aus Silikon hergestellt ist.

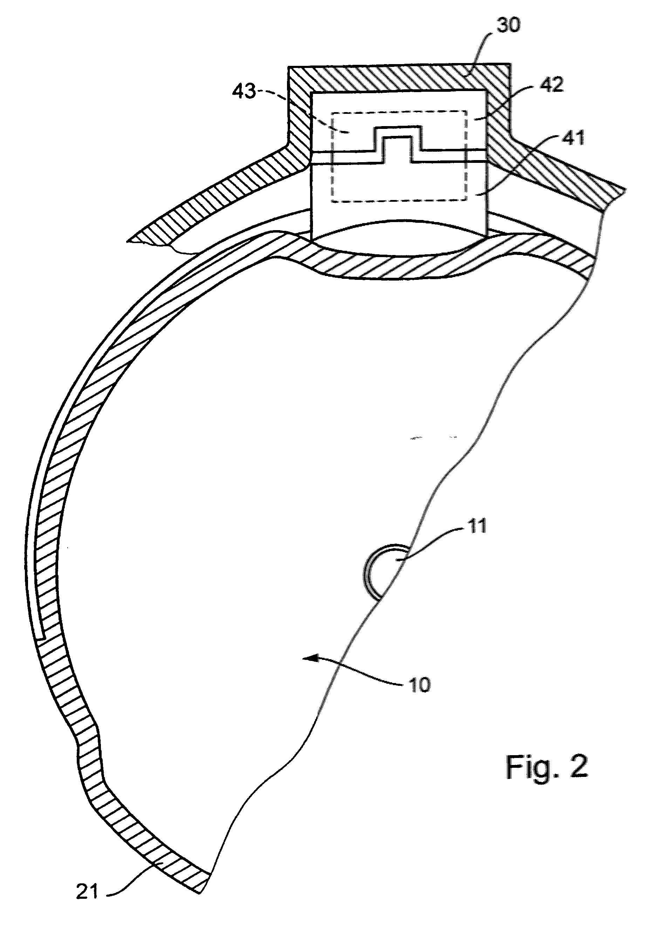

Die Figur 2 zeigt in einer Teilansicht eine schematische Anordnung eines Isolationselementes 40 in der Anordnung zwischen Elektromotor 10 und Motorhalter 30, wobei der Motorhalter ein Kunststoffspritzgußteil sein kann, das Ausnehmungen oder Aufnahmen zur Aufnahme der schalenförmigen Elemente 42 aufweist. Der Elektromotor 10 mit seinem Gehäuse kann einen Motoradapter aufweisen, der die schalenförmigen Elemente 41 aufnimmt oder der Elektromotor kann diese schalenförmigen Elemente selbst an Aufnahmen aufnehmen. Auch könnten die schalenförmigen Elemente mit Motorhalter, Motoradapter oder Motorgehäuse einstückig ausgebildet sein.

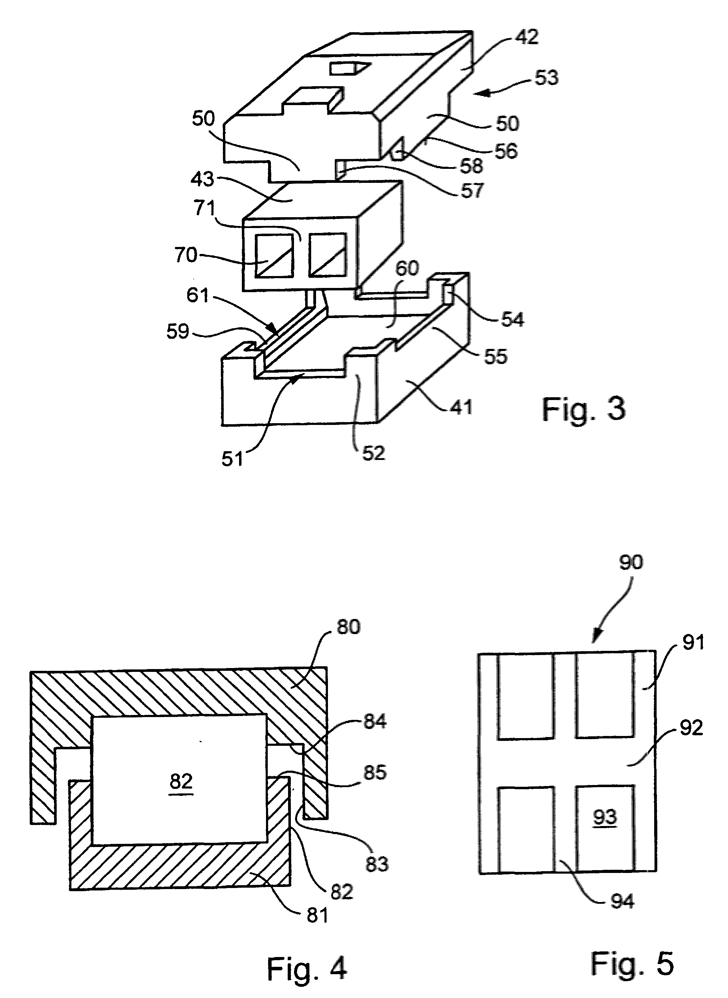

Das eine schalenförmige Element 41,42, siehe auch Figur 3, weist zumindest einen Vorsprung oder Vorsprünge 50,52 auf, die in zumindest eine Ausnehmung oder mehrere Ausnehmungen 51,53 des anderen Teiles 42,41 eingreifen. Im Falle, daß die räumliche Ausdehnung der Ausnehmungen größer ist als die räumliche Ausdehnung der Vorsprünge, kann das eine schalenförmige Element unter Beaufschlagung des zwischengelegten elastischen Elementes entgegen einer Rückstellkraft gegenüber dem anderen schalenförmigen Element verlagert werden. Eine Begrenzung der Verlagerbarkeit erfolgt über Anschlagmittel und Gegenanschlagmittel 54,55,56,57,58,59, so daß jeweils die Anschlagmittel 54,55 und 59 mit Gegenanschlagmitleln 56,57 und 58 zusammenwirken können. Vorzugsweise weist jeder Vorsprung und jede Ausnehmung Anschlagmittel bzw. Gegenanschlagmittel auf. Es kann je nach Ausführungsform aber acuh zweckmäßig sein, wenn die Anschlagmittel bzw. die Gegenanschlagmittel von den Vorsprüngen bzw. Ausnehmungen zumindest teilweise getrennt sind.

Zur Aufnahme des elastischen Elementes weist zumindest das eine schalenförmige Element eine Aufnahme 60 auf, die einen umlaufenden Rand 61 oder andere Mittel zum Fixieren der Lage des elastischen Mittels aufweist. Diese andere Mittel können auch Vorsprünge oder ähnliches sein. Zweckmäßig ist es, wenn die räumliche Ausdehnung der Aufnahme 60 gleich groß oder kleiner ist als die räumliche Ausdehnung des elastischen Elementes 43 in der Ebene der Aufnahme 60 ist. Dadurch wird das elastische Element spielfrei und gegebenenfalls unter Vorspannung aufgenommen. Es können bei anderen Ausführungsbeispielen der Erfindung auch andere Formen Verwendung finden.

Das elastische Mittel 43 ist im wesentlichen quaderförmig ausgebildet und weist Aussparungen 70 oder durchgängige Kanäle auf, die durch Trennwände 71 von einander getrennt sind. Dadurch kann die Elastizität des elastischen Elementes gezielt gesteuert werden, wobei die Elastizität in den unterschiedlichen Koordinatenrichtungen gezielt unterschiedlich gewählt werden kann.

Dir Figur 4 zeigt ein weiteres Ausführungsbeispiel einer Anordnung von schalenförmigen Elementen, wobei das schalenförmige Element 80 das schalenförmige Element 81 teilweise umgreift und durch die sich umgreifenden Bereiche sich Anschlagmittel 82 und Gegenanschlagmittel 83 ausbilden, die eine relative Bewegung der beiden Teile zueinander begrenzen. Auch sind hinsichtlich der vertikalen Bewegung der Teile 80 und 81 Anschlagmittel 84 und Gegenanschlagmittel 85 vorgesehen, die eine relative Bewegung der beiden Teile begrenzen.

Die Figur 5 zeigt einen Schnitt durch ein elastisches Element 90, wobei in diesem im wesentlichen quaderförmigen Element Ausnehmungen 93 vorgesehen sind, die durch Trennwände 91, 94 und 92 von einander getrennt sind. Dabei kann es zweckmäßig sein, wenn die eine oder andere Trennwand 92 oder 94 in der Schwerpunktsebene des Gebläses liegt, das von dem Elektromotor angetrieben wird. Besonders vorteilhaft ist es, wenn dies für die Trennwand 92 zutrifft.

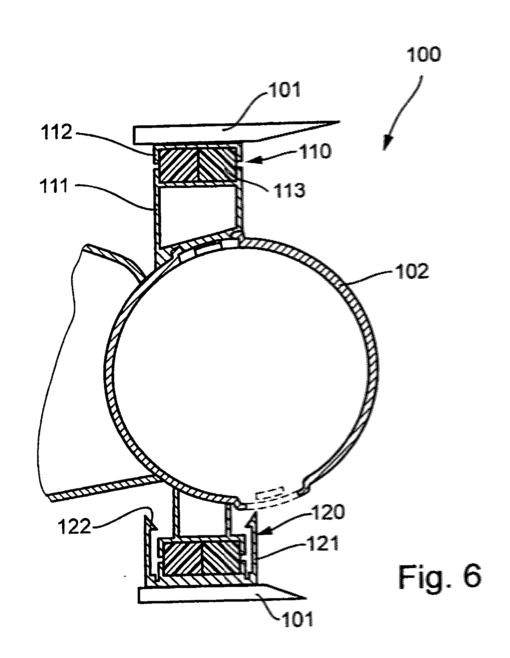

Die Figur 6 zeigt ein Ausführungsbeispiel einer Vorrichtung 100 zur elastischen Anordnung eines Elektromotors in einer Aufnahme oder einem Motorhalter 101. Dabei ist zwischen Elektromotor und Aufnahme 101 zumindest ein elastisches Isolationselement 110 angeordnet. Das Isolationselement 110 besteht dabei zumindest aus einem ersten schalenförmigen Element 111, einem zweiten schalenförmigen Element 112 und einem elastischen Element 113. Im Ausführungsbeispiel der Figur 6 ist die erste Schale 111 mit dem Motoradapter 102 verbunden und die zweite Schale ist mit dem Motorhalter 101 verbunden. Zwischen diesen Schalen ist ein elastisches Element 113 angeordnet.

Die Schalen 112 oder 111 weisen Sicherungsmittel auf, so daß nach einer Montage der ersten Schale mit der zweiten Schale diese mittels der Verliersicherung derart gehalten sind, daß die Teile beim Transport nicht auseinanderfallen. Dazu sind in vorteilhafter Weise an zumindest einem der Teile Arme 121 vorgesehen, die mit Vorsprüngen 122 versehen sind, die um das andere schalenartige Element greifen und so verhindern, daß das eine Teil von dem anderen Teil ohne große Krafteinwirkung getrennt werden kann. Dabei weisen die Vorsprünge in Richtung auf das andere schalenartige Bauteil. Zweckmäßig sind die Aufnehmen der schalenartigen Elemente derart ausgebildet, daß im Falle, daß die schalenartigen Teile an den Nasen der Verliersicherung gehalten werden, das elastische Element nicht aus der Aufnahme fällt.

Besonders vorteilhaft ist eine Vorrichtung zur elastischen Anordnung eines Elektromotors in einer Aufnahme gemäß der vorliegenden Erfindung, bei der das Gebläse oder ein anderes von einem Elektromotor angetriebenes Teil bei stehendem Einbau oder liegendem Einbau Verwendung findet.

## Patentansprüche

1. Vorrichtung zur eiastischen Anordnung eines Eiektromotors in einer Aufnahme, wobei zwischen Elektromotor und Aufnahme zumindest ein elastisches Isolationselement angeordnet ist, **dadurch gekennzeichnet, daß** das Isolationselement aus einem ersten schalenförmigen Element, einem zweiten schalenförmigen Element und einem elastischen Element besteht.

2. Vorrichtung nach Anspruch 1, **dadurch gekennzeichnet, daß** das erste schalenförmige Element und/oder das zweite schalenförmige Element zumindest einen Vorsprung aufweist, der in zumindest eine Ausnehmung des zweiten schalenförmigen Elements bzw. des ersten Elements eingreift.

3. Vorrichtung nach Anspruch 1, **dadurch gekennzeichnet, daß** das erste und/oder zweite schalenförmige Element einen Kragen aufweist, der das zweite bzw. erste schalenförmige Element zumindest teilweise umgreift.

4. Vorrichtung nach Anspruch 2 oder 3, **dadurch gekennzeichnet, daß** das erste schalenförmige Element relativ zum zweiten schalenförmigen Element bewegbar ist.

5. Vorrichtung nach Anspruch 4, **dadurch gekennzeichnet, daß** das erste schalenförmige Element und/oder das zweite schalenförmige Element Anschlagmittel aufweist, die mit Gegenanschlagmitteln des zweiten und/oder ersten schalenförmigen Elementes zusammenwirken, mittels welchen eine relative Bewegung des ersten schalenförmigen Elementes relativ zu dem zweiten schalenförmigen Elementes begrenzt wird.

6. Vorrichtung nach Anspruch 1, **dadurch gekennzeichnet, daß** das elastische Element eine quaderförmige Gestalt aufweist.

7. Vorrichtung nach Anspruch 6, **dadurch gekennzeichnet, daß** das elastische Element einen durchgängigen Kanal aufweist, der nicht mit dem elastischen Material ausgefüllt ist.

8. Vorrichtung nach Anspruch 7, **dadurch gekennzeichnet, daß** das elastische Element zumindest einzelne Aussparungen aufweist.

9. Vorrichtung nach Anspruch 8, **dadurch gekennzeichnet, daß** das elastische Element eine Mehrzahl von Aussparungen aufweist, die durch Trennwände aus dem elastischen Material gegeneinander abgegrenzt sind.

10. Vorrichtung nach einem der vorhergehenden Ansprüche 1 und 6 bis 9, **dadurch gekennzeichnet, daß** das elastische Element aus einem Material besteht.

11. Vorrichtung nach einem der vorhergehenden Ansprüche 1 und 6 bis 10, **dadurch gekennzeichnet, daß** das elastische Element aus Silikon besteht.

12. Vorrichtung nach einem der Ansprüche 1 und 6 bis 9, **dadurch gekennzeichnet, daß** das elastische Element aus zumindest zwei Materialien besteht.

13. Vorrichtung nach Anspruch 12, **dadurch gekennzeichnet, daß** eines der Materialien Silikon ist.

## Claims

1. Device for elastically mounting an electric motor in a compartment with at least one elastic isolating element disposed between the electric motor and the compartment, **characterised in that** the isolating element comprises a first shell-shaped element, a second shell shaped element and an elastic element.

2. Device as claimed in claim 1, **characterised in that** the first shell-shaped element and/or the second shell-shaped element has at least one projection which engages in at least one recess of the second shell-shaped element or the first element.

3. Device as claimed in claim 1, **characterised in that** the first and/or second shell-shaped element has a collar which engages round the second or first shell-shaped element.

4. Device as claimed in claim 2 or 3, **characterised in that** the first shell-shaped element is displaceable relative to the second shell-shaped element.

5. Device as claimed in claim 4, **characterised in that** the first shell-shaped element and/or the second shell-shaped element has stop means which co-operate with complementary stop means of the second and/or first shell-shaped element, thereby restricting a relative displacement of the first shell-shaped element with respect to the second shell-shaped element.

6. Device as claimed in claim 1, **characterised in that** the elastic element has a cuboid structure.

7. Device as claimed in claim 6, **characterised in that** the elastic element has a passage extending through it, which is not filled with the elastic material.

8. Device as claimed in claim 7, **characterised in that** the elastic element has at least individual recesses.

9. Device as claimed in claim 8, **characterised in that** the elastic element has a plurality of recesses, which are separated from one another by dividing walls made from the elastic material.

10. Device as claimed in one of preceding claims 1 and 6 to 9, **characterised in that** the elastic element is made from one material.

11. Device as claimed in one of preceding claims 1 and 6 to 10, **characterised in that** the elastic element is made from silicone.

12. Device as claimed in one of claims 1 and 6 to 9, **characterised in that** the elastic element is made from at least two materials.

13. Device as claimed in claim 12, **characterised in that** one of the materials is silicone.

## Revendications

1. Dispositif pour l'agencement élastique d'un moteur électrique dans un logement, où au moins un élément d'isolation élastique est disposé entre le moteur électrique et le logement,
**caractérisé en ce que** l'élément d'isolation se compose d'un premier élément en forme de coque, d'un second élément en forme de coque et d'un élément élastique.

2. Dispositif selon la revendication 1, **caractérisé en ce que** le premier élément en forme de coque et/ou le second en forme de coque présente au moins une partie saillante qui s'engage dans au moins une cavité du second élément en forme de coque ou du premier élément en forme de coque.

3. Dispositif selon la revendication 1, **caractérisé en ce que** le premier et/ou le second élément en forme de coque présente une collerette qui entoure au moins partiellement le second ou le premier élément en forme de coque.

4. Dispositif selon la revendication 2 ou 3, **caractérisé en ce que** le premier élément en forme de coque est mobile par rapport au second élément en forme de coque.

5. Dispositif selon la revendication 4, **caractérisé en ce que** le premier élément en forme de coque et/ou le second élément en forme de coque présente des moyens formant des butées qui agissent en association avec des moyens formant des contre-butées du second et/ou du premier élément en forme de cocue, moyens formant des contre-butées à l'aide desquels un mouvement relatif du premier élément en forme de coque est limité par rapport au second élément en forme de coque.

6. Dispositif selon la revendication 1, **caractérisé en ce que** l'élément élastique présente une forme parallélépipédique.

7. Dispositif selon la revendication 6, **caractérisé en ce que** l'élément élastique présente un canal traversant qui n'est pas rempli par la matière élastique.

8. Dispositif selon la revendication 7, **caractérisé en ce que** l'élément élastique présente au moins des évidements individuels.

9. Dispositif selon la revendication 8, **caractérisé en ce que** l'élément élastique présente une pluralité d'évidements qui sont délimités les uns par rapport aux autres par des parois de séparation constituées de la matière élastique.

10. Dispositif selon l'une quelconque des revendications 1 et 6 à 9, **caractérisé en ce que** l'élément élastique se compose d'une seule matière.

11. Dispositif selon l'une quelconque des revendications 1 et 6 à 10, **caractérisé en ce que** l'élément élastique se compose de silicone.

12. Dispositif selon l'une quelconque des revendications 1 et 6 à 9, **caractérisé en ce que** l'élément élastique se compose au moins de deux matières.

13. Dispositif selon la revendication 12, **caractérisé en ce que** l'une des matières est du silicone.
